# EUROPEAN PATENT APPLICATION

(11) **EP 1 965 144 A1**
(43) Date of publication of application: **03.09.2008**
(21) Application number: 07120743.5
(22) Date of filing: 15.11.2007
(51) Int. Cl.: F24F 13/32, E04B 9/20, F16B 2/22

(54) **Support for air ducts or similar**

(30) Priority: 27.02.2007 ES 200700515; 12.07.2007 EP 07112375
(71) Applicant: Suspensiones Elasticas Del Norte, S.L., 14700 Palma del Rio, Córdoba (ES)
(72) Inventor: Muñoz Molina, Juan, Palma de Rio 14700, Córdoba (ES)
(74) Representative: Pons Arino, Angel

(57) **Abstract**

Support (1) for air ducts (4) that comprises a threaded hanging rod (7) that may be fitted overhead to a structure or floor, comprising a U-shaped body (3) fitted with a lower horizontal flange (14) with a hole (15) for the height-adjustable holding up of the support (1) along the threaded hanging rod (7), and an upper horizontal flange (5) fitted with a guide hole (6) for the threaded hanging rod (7); and harpoons (2) that jut sideways out of the body (3), intended to penetrate into the side walls of the air duct (4) to support.

## Description

### OBJECT OF THE INVENTION

The present invention refers to a support for air ducts or similar.

### BACKGROUND OF THE INVENTION

At present, the fitting of air ducts (ventilation, air conditioning, etc.) comprises rails or racks suspended by means of threaded rods and height-adjustable nuts that fasten the duct from below.

In installations where acoustic and/or antivibratory isolation is needed, the threaded, hanging rods are split in two, separated by an antivibratory joint that includes an elastic or damper element.

This traditional system has several disadvantages, among which the following should be mentioned:
- It requires the use of a high number of threaded, hanging rods and nuts, since every rack makes the placing of two rods necessary, one on each side, and even more -twice this amount- when antivibratory elements are inserted in between.
- Since the section of the duct changes in different lengths to support the load depending on the branching of air inlets or outlets, rods of different lengths to adapt to the different sections of the duct are needed, which complicates the installation, especially its levelling.
- The racks reduce headway with regard to the floor, and, in many cases, they cause problems with headroom themselves, even more so if they are lagged or hidden by false ceilings.
These drawbacks are overcome by the support of the invention.

### DESCRIPTION OF THE INVENTION

The support of this invention has a simple, economic embodiment that reduces the necessary number of rods and nuts, facilitating its positioning, and does not reduce headroom. In addition, the U-shaped structure provides the support with a greater strength against bending, the threaded rods having a smaller diameter and thus saving material and improving stability.

According to a first aspect of the invention, the support comprises a body, usually U-shaped with its opening directed towards one of the sides, from which harpoons jut out sideways, whose purpose is to penetrate into the side faces of the ducts made of glass fibre or similar material conducting the air. In this way, lower racks are unnecessary and therefore headroom is not reduced; neither is the existence of sideways-facing pairs of rods needed, since it is not necessary to hold the racks, thus enabling, if the torsion resistance of the duct allows it, the use of rods and supports, for example, in staggered distributions.

It has also been considered that the body of the support has lateral holes to fasten it to the duct by means of screws if the harpoons are insufficient. In addition, preferred embodiments of the support include an adhesive sheet at the front of the body where the harpoons jut out in order to improve fixture to the duct.

The body of the support has two horizontal flanges, a lower horizontal flange provided with a hole for the height-adjustable holding up of the support along the threaded hanging rod; and an upper horizontal flange provided with a guide hole for the threaded hanging rod. The hole of the upper horizontal flange guides the threaded hanging rod, preventing bending taking place, whereas the one in the lower horizontal flange, in addition, carries out the function of housing the height-adjustable element. There are two main variations:
- Without acoustic isolation: an internally threaded bushing is fitted into the hole of the lower horizontal flange to be joined to the threaded hanging rod in a rotating manner, so that rotation of the bushing produces the height adjustment.
- With acoustic isolation: the body of the support additionally has a threaded holder that is joined to the threaded hanging rod, where an elastic and/or damper element is inserted between the holder and the lower horizontal flange of the body of the support. The elastic and/or damper element is made of rubber in preferred variations of the invention. In this case, a pipe-holder of elastic material is also fitted into the hole of the upper horizontal flange, intended to prevent the threaded hanging rod from directly touching the aforementioned flange, in order to increase acoustic and vibratory isolation in this way. As regards the lower horizontal flange, the elastic and/or damper element itself prevents direct contact between the threaded hanging rod and the lower horizontal flange.

According to a second aspect of the invention, the hanging rod that is joined to the body of the support may be unthreaded. In this case, the body of the support has the flanges slightly bent outwards, the unit forming a U with divergent wings. In this position, it would not be possible to insert the unthreaded hanging rod into the corresponding holes, the position of the flanges needing to be forced, closing them until they are parallel. Therefore, once the unthreaded hanging rod is inserted into position, the flanges are left free again, which tend to open up and return to their initial position, pressing the unthreaded hanging rod against the holes, thus trapping the aforementioned unthreaded hanging rod.

The body of all variations of the invention may be fitted with an adhesive sheet at the front of the part where the harpoons jut out.

### BRIEF DESCRIPTION OF THE DRAWINGS

Figure 1 shows a view of the body of the support according to the invention.
Figure 2 shows a perspective view of a duct held by the support according to the invention.
Figures 3 and 4 show both variations of the support according to the invention in the cases where acoustic isolation is or is not needed, respectively.
Figures 5 and 6 show different views of a preferred embodiment according to a second aspect of the invention where acoustic isolation is not needed.

### DESCRIPTION OF PREFERRED EMBODIMENTS OF THE INVENTION

The support (1) of the invention comprises a body (3) and harpoons (2) that jut sideways out of the body (3) of the support (1), intended to penetrate into the side walls of the fibreglass ventilation duct (4) to support. Likewise, the body (3) may have lateral holes (2a) to strengthen fixture to the duct (4) by means of screws.

The body (3) of the support (1) has an upper horizontal flange (5) with a hole (6) intended for the threaded hanging rod (7) to pass through, and a lower horizontal flange (14).

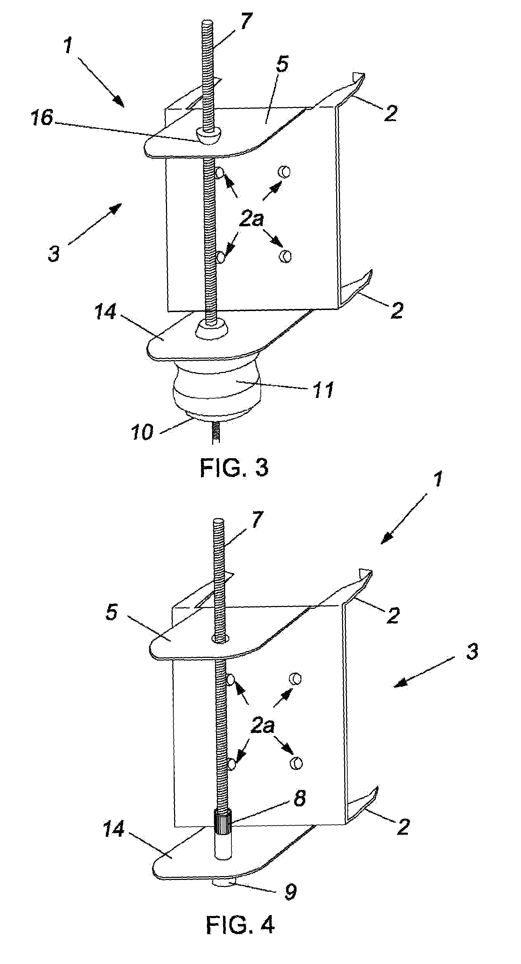

Depending on whether acoustic isolation is required or not, the invention may have two main variations: in one of them, shown in figure 4, acoustic isolation is not needed, and an internally threaded bushing (8) is supported in the hole (15) of the flange (14), where the threaded hanging rod (7) is joined in a rotating manner in order to adjust the height of the support (1), and, therefore, of the duct (4), with the simple rotating of the bushing (8), which, to facilitate this task, is embossed around its edge to increase finger grip. It has been preferably considered that the bushing (8) is made from a plastic material piece where a nut (9), that stays embedded, has the thread where the threaded hanging rod (7) is joined.

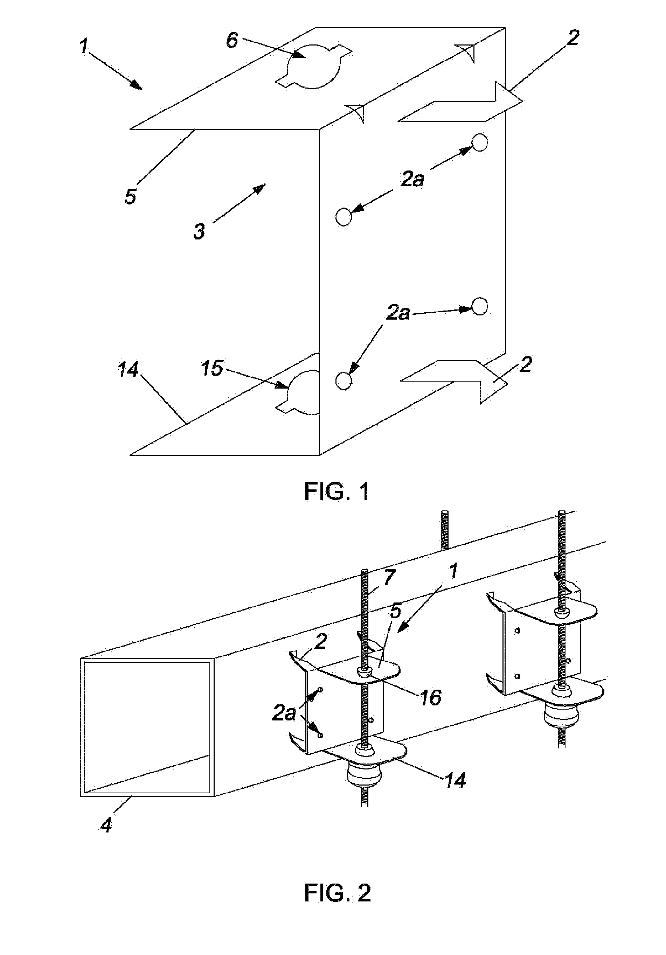

According to a second variation of the invention shown in figures 2 and 3, when acoustic and/or antivibratory isolation is needed, in the support (1) of the invention the bushing (8) is replaced by a threaded holder (10) on which the lower end of an elastic element (11) rests, supported above on the lower face of the lower horizontal flange (14), and, therefore, is inserted between the body (3) of the support (1) and the threaded hanging rod (7). Said elastic element (11) is crossed by threaded rod (7) and, to improve its positioning, the threaded holder (10) includes a flange (not shown in the drawings) corresponding to a recessed perimeter of elastic element (11).

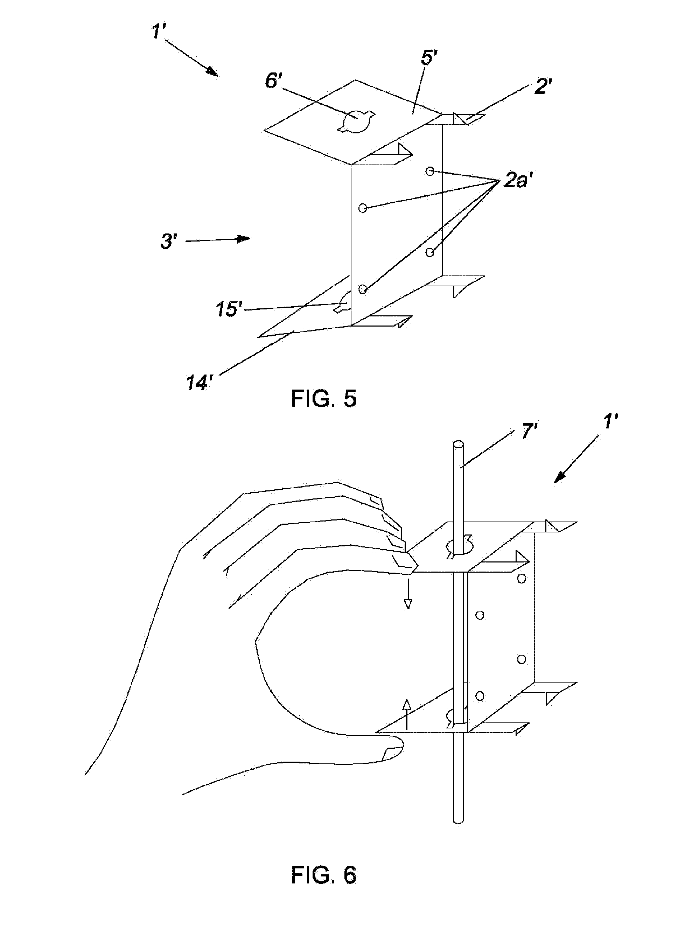

According to another embodiment of the invention, shown in Figures 5 and 6, the hanging rod (7') that is joined the body (3') of the support (1') may be unthreaded. In addition, the support (1') has harpoons (2') and holes (2a') to fasten it to an air duct (4). In this case, the body (3') of the support (1') has the upper horizontal (5') and lower horizontal (14') flanges slightly bent outwards, the body (3') of the support (1') forming a U with flexible divergent wings to insert the unthreaded hanging rod (7'). In this position, it is impossible to insert the unthreaded hanging rod (7') into the corresponding holes (6', 15'), the position of the upper (5') and lower (14') horizontal flanges needing to be forced, closing them until they are parallel. In this way, once the unthreaded hanging rod (7') has been inserted into position, the upper (5') and lower (14') horizontal flanges are left free again, which tend to open up and return to their initial position, pressing the unthreaded hanging rod (7') against the holes (6',15'), thus trapping the aforementioned unthreaded hanging rod (7').

## Claims

1. Support (1) for air ducts (4) that comprises a threaded hanging rod (7) that may be fitted overhead to a structure or floor; **characterized by** comprising:
a U-shaped body (3) fitted with a lower horizontal flange (14) with a hole (15) for holding in a height-adjustable manner the support (1) along the threaded hanging rod (7), and an upper horizontal flange (5) fitted with a guide hole (6) for the threaded hanging rod (7); and
harpoons (2) which jut sideways out of the body (3) intended to penetrate into the side walls of the air duct (4) to support.

2. Support (1) according to claim 1, **characterized by** comprising a internally threaded bushing (8) fitted into the hole (15) of the lower horizontal flange (14) to be joined to the threaded hanging rod (7) in a rotating manner, so that rotation of said bushing (8) produces height adjustment of the support (1).

3. Support (1) according to claim 2, **characterized by** the threaded bushing (8) comprising an external embossment to facilitate its rotating action.

4. Support (1) according to any of claims 2 or 3, **characterized by** the threaded bushing (8) being embodied in a plastic material casing, with an embedded nut (9) in the centre fitted with a threaded connection to the threaded hanging rod (7).

5. Support (1) according to claim 1, **characterized by** comprising a threaded holder (10) that gives lower support to an elastic element (11) whose upper end rests on the lower part of the lower horizontal flange (14) of the body (3) of the support (1).

6. Support (1) according to claim 5, **characterized by** having a pipe-holder (16) of elastic material going through the hole (6) of the upper horizontal flange (5).

7. Support (1) according to any of claims 5 or 6, **characterized by** the elastic element (11) being made or rubber.

8. Support (1') for air ducts (4) that comprises an unthreaded hanging rod (7') fitted overhead to a structure or floor; **characterized by** comprising:
a body (3') fitted with two horizontal flanges, one lower horizontal flange (14') and one upper (5') horizontal flange, each with a hole (6',15') to connect the unthreaded hanging rod (7'), the support (1') having a U shape with divergent wings; and
harpoons (2') jutting sideways out of the body (3') intended to penetrate into the side walls of the air duct (4) to support.

9. Support (1, 1') according to any of the previous claims, **characterized by** the body (3, 3') of the support (1, 1') having side holes (2a, 2a') that enable its screwed fitting to the air duct (4).

10. Support (1, 1') according to any of the previous claims, **characterized by** comprising an adhesive sheet at the front of the body (3, 3') where the harpoons (2, 2') jut out.
